# EUROPEAN PATENT SPECIFICATION

(11) **EP 2 208 899 B1**
(45) Date of publication and mention of the grant of the patent: **25.01.2012**
(21) Application number: 09015439.4
(22) Date of filing: 17.04.2007
(51) Int. Cl.: F16C 19/26, F16C 19/28, F16C 23/08

(54) **Rolling bearing of oscillation roller and oscillation method of roller**
Wälzlager einer Oszillationswalze und Oszillationsverfahren für die Walze
Palier à rouleaux de rouleau d'oscillation et procédé d'oscillation du rouleau

(30) Priority: 20.04.2006 JP 2006117032; 23.08.2006 JP 2006226902
(43) Date of publication of application: 21.07.2010
(62) Divisional of application: 07007800.1
(73) Proprietor: KINYOSHA CO. LTD., Tokyo 141-0032 (JP)
(72) Inventor: Yoshikawa, Yoji, Kasami-shi Ibaraki-ken (JP); Yamawaki, Masayuki, Katano-shi Osaka (JP)
(74) Representative: Herrmann, Uwe

(56) References cited:
- GB-A- 888 611
- JP-A- 2005 147 331
- US-A- 4 673 302
- US-A- 5 823 687

## Description

This invention relates to an oscillation method of a roller. More particularly, the present invention relates to a rolling bearing to be mounted in a oscillation roller that can be used as form rubber roller and dampening rubber roller used in a printing machine.

Rollers are being widely used as rotary members in various fields of industry. In certain occasions, rollers that are used as rotary members are required to axially oscillate as they revolve. Rollers having such a functional feature are generally referred to as oscillation rollers.

While oscillation rollers are being widely used in various fields of industry, typical applications of oscillation rollers include form rubber rollers and dampening rollers of printing machines.

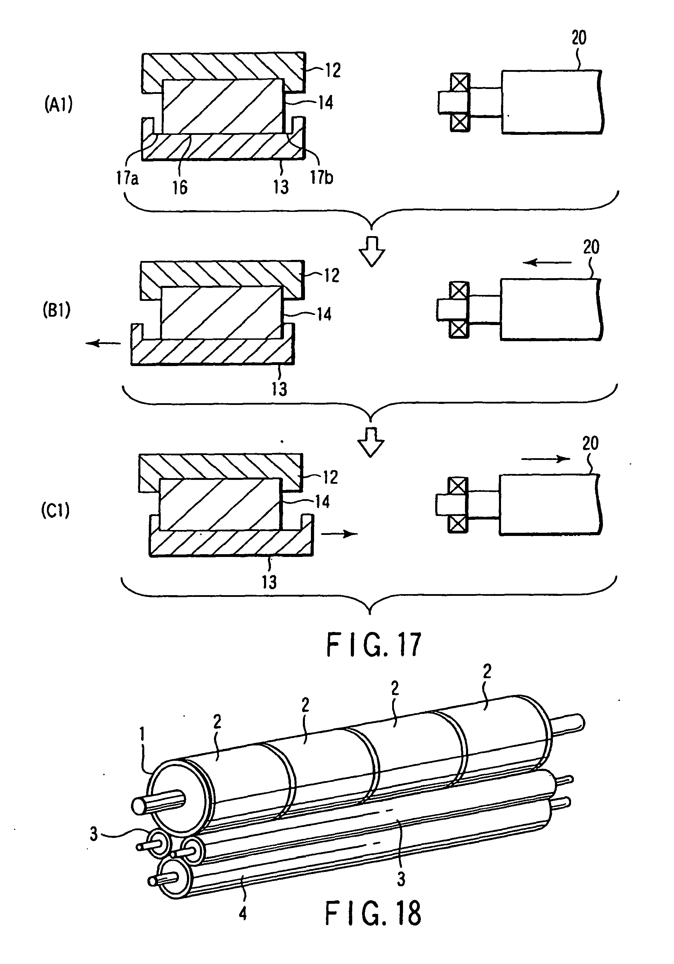

FIG. 18 of the accompanying drawings schematically illustrates the part of a form rubber roller, which is the most downstream roller of the forming part of a printing machine, for applying ink to printing plates. In FIG. 18, reference numeral 1 denotes a plate cylinder. A total of four printing plates 2 are mounted on a plate cylinder 1 to surround the latter and arranged at predetermined intervals. In FIG. 18, reference numerals 3, 3 respectively denote the most downstream form rubber rollers. In FIG. 18, reference numeral 4 is an ink distributing roller. A transfer roller that is linked to an ink supply unit and other appropriate rollers are arranged upstream relative to the form rubber rollers 3, 3 and held in contact.

In the above-described printing machine, the form rubber rollers 3, 3 are held in contact with the printing plates 2, 2, ... mounted around the plate cylinder 1 so as to be driven to rotate. Then, as a result, the ink supplied from the ink supply unit is made to transfer to the printing plates 2, 2, ... around the plate cylinder.

A form rubber roller 3 that is being used in a printing machine is held in contact with the ink distributing roller 4 that transversally (axially) reciprocates and axially reciprocates along with the ink distributing roller 4. Such a roller is referred to as oscillation roller. By using an oscillation roller as a form roller, it is possible to cause the form roller to oscillate, following the ink distributing roller that transversally reciprocates. Then, as a result, the ink on the peripheral surface of the form roller is dispersed and transfer uniformly to the printing plates 2 mounted to the plate cylinder 1 to surround the latter.

Since the form rollers 3, 3 are liable to be damaged by the edges of the plate cylinder 1, the form rubber rollers 3, 3 are driven to transversally oscillate in order to avoid such damages. Additionally, the form rollers 3, 3 can give rise to frictional areas that are annular in the direction of revolutions at positions corresponding to the edges of the printing plates 2 and consequently deficiency of ink transferability and unevenness of ink density can arise at the corresponding positions in the subsequent printing process. It is necessary for the form rubber rollers to transversally oscillate in order to avoid such problems.

Ghosts may appear when printing an image where color densities can abruptly change in the transversal direction. As a general practice, the metal made rollers that are held in contact with the form rubber rollers are driven to axially reciprocate in order to avoid such ghosts.

Known oscillation rollers include the one disclosed in Jpn. Pat. Appln. Publication No. 60-101049. The disclosed oscillation roller has a roller shaft arranged at the inside of a roller coat member and held in position so as not to be able to revolve. The roller coat member of the form rubber roller that oscillates transversally is borne on the roller shaft so as to be able to revolve and axially movable. Additionally the axial stroke of the roller coat member is limited by two bushes 22, 24 at the opposite sides and pressure springs 26 are arranged at the respective lateral sides of the roller between the two bushes. However, known oscillation rollers are complex in terms of configuration and are accompanied by the problem of a high manufacturing cost. Thus, there is a strong demand for oscillation rollers that are structurally simple and can be provided at a low manufacturing cost.

In view of the above-identified circumstances, it is therefore an object of the present invention to provide a rolling bearing that has a simple structure and allows a roller to oscillate axially.

According to the present invention, the above object is achieved by providing a rolling bearing comprising a plurality of cylindrical rolls as rolling members between an inner ring and an outer ring thereof. The transversal distance of the surface of either or the surfaces of both of the inner ring and the outer ring vis-à-vis the raceway surfaces of the cylindrical rolls vis-à-vis is made longer than the axial length of the cylindrical rolls. With this arrangement, either or both of the inner ring and the outer ring of the rolling bearing can axially move.

The roller can oscillate axially once a rolling bearing according to the invention is fitted to either or both of a pair of shaft supporting sections of the roller. Another rolling bearing can be fitted to the other shaft supporting section of the roller located at the opposite side relative to the former shaft supporting section. When the inner ring or the outer ring of the former rolling bearing is moved axially and the roller is driven to move axially, the inner ring or the outer ring, whichever appropriate, of the latter rolling bearing follows the axial movement of the roller.

In another aspect of the present invention, there is provided an oscillation method of a roller according to which a rolling bearing is fitted to one of a pair of shaft supporting sections of a roller. Then, as a result, the inner ring or the outer ring of the rolling bearing becomes axially movable. Another similar rolling bearing is fitted to the other shaft supporting section of the roller located at the opposite side relative to the former shaft supporting section that the roller may axially oscillate.

Thus, according to the present invention, it is possible to turn a conventional fixed roller that does not oscillate into an oscillation roller simply by remodeling the rolling bearings fitted to the respective shaft supporting sections. The remodeling of the rolling bearings consists in reforming the rolling bearings, in each of which a plurality of cylindrical rolls are arranged as rolling members between the inner ring and outer ring thereof. The reforming by turn consists in making either or both of the inner ring or the outer ring of each of the rolling bearings axially movable. Thus, the bearings can be reformed in a simple manner to turn the roller into an oscillation roller at low cost.

The invention can be more fully understood from the following detailed description when taken in conjunction with the accompanying drawings, in which:
FIG. 1 is a schematic lateral view of an oscillation roller mounted with an embodiment of rolling bearings of the present invention at the bearing supporting section thereof;
FIG. 2 is a partly cut out schematic perspective view of an embodiment of rolling bearing of the present invention;
FIG. 3 is a partly cut out schematic perspective view of another embodiment of rolling bearing of the present invention;
FIG. 4 is a schematic exemplary illustration of the relationship between the raceway rings (inner ring and outer ring) and the rolling members of an embodiment of rolling bearing of the present invention;
FIG. 5 is a schematic exemplary illustration of the relationship between the raceway rings (inner ring and outer ring) and the rolling bearings of a conventional rolling bearing;
FIG. 6 is a schematic perspective view of the inner ring of still another embodiment of rolling bearing of the present invention;
FIG. 7 is a schematic illustration of an oscillation roller mounted with rolling bearings according to the present invention and adapted to be oscillated by a reciprocal movement of a swing roller held in contact with the oscillation roller;
FIG. 8 is a partly cut out schematic perspective view of still another embodiment of rolling bearing of the present invention;
FIG. 9 is a partly cut out schematic perspective view of still another embodiment of rolling bearing of the present invention;
FIG. 10 is a partly cut out schematic perspective view of still another embodiment of rolling bearing of the present invention;
FIG. 11 is a partly cut out schematic perspective view of still another embodiment of rolling bearing of the present invention;
FIG. 12 is a partly cut out schematic perspective view of still another embodiment of rolling bearing of the present invention;
FIG. 13 is a partly cut out schematic perspective view of still another embodiment of rolling bearing of the present invention;
FIG. 14 is a partly cut out schematic perspective view of still another embodiment of rolling bearing of the present invention;
FIG. 15 is a partly cut out schematic perspective view of still another embodiment of rolling bearing of the present invention;
FIG. 16 is a partly cut out schematic perspective view of still another embodiment of rolling bearing of the present invention;
FIGS. 17A1 through 17C1 are schematic illustrations of the relationship between the oscillation of an oscillation roller formed by using still another embodiment of rolling bearing of the present invention and the sliding motion of the inner ring of the rolling bearing;
FIG. 18 is a schematic illustration of the relationship between the form rubber roller for applying ink to the plate cylinder and the swing roller of a known printing machine;
FIG. 19 is a photograph of the form rubber roller that is an oscillation roller of an embodiment of the present invention, showing the surface condition thereof after six month of use; and
FIG. 20 is a photograph of a form rubber roller that does not oscillate, showing the surface condition thereof after a week of use.

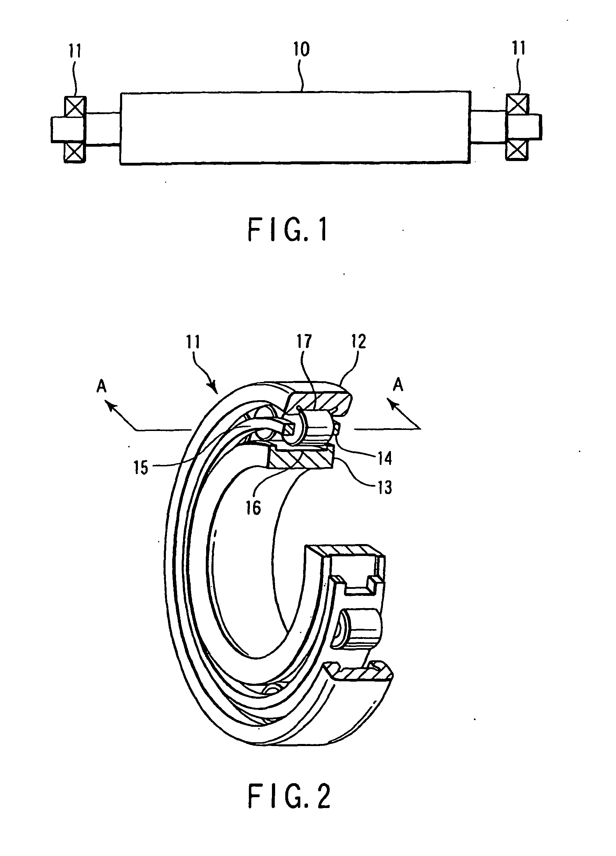

FIG. 1 is a schematic lateral view of an oscillation roller mounted with rolling bearings according to an embodiment of the present invention. Referring to FIG. 1, reference numeral 10 denotes a roller main body and reference numeral 11 denotes a rolling bearing fitted to a shaft supporting section of the roller main body. FIG. 2 is a partly cut out schematic perspective view of one of the rolling bearings 11. In FIG. 2, reference numeral 11 denotes a rolling bearing, reference numeral 12 denotes an outer ring, while reference numeral 13 denotes an inner ring and reference numeral 14 denotes a cylindrical roll that is a rolling member. In FIG. 2, reference numeral 15 denotes a cage of cylindrical rolls 14.

In the rolling bearing 11, either the outer ring 12 or the inner ring 13 is made longer than the axial length of the cylindrical rolls 14. In FIG. 2, the transversal distance of the surface of the inner ring 13 that is facing the raceway surfaces of the cylindrical roll 14 as viewed in the axial direction is made longer than the axial length of the cylindrical rolls 14.

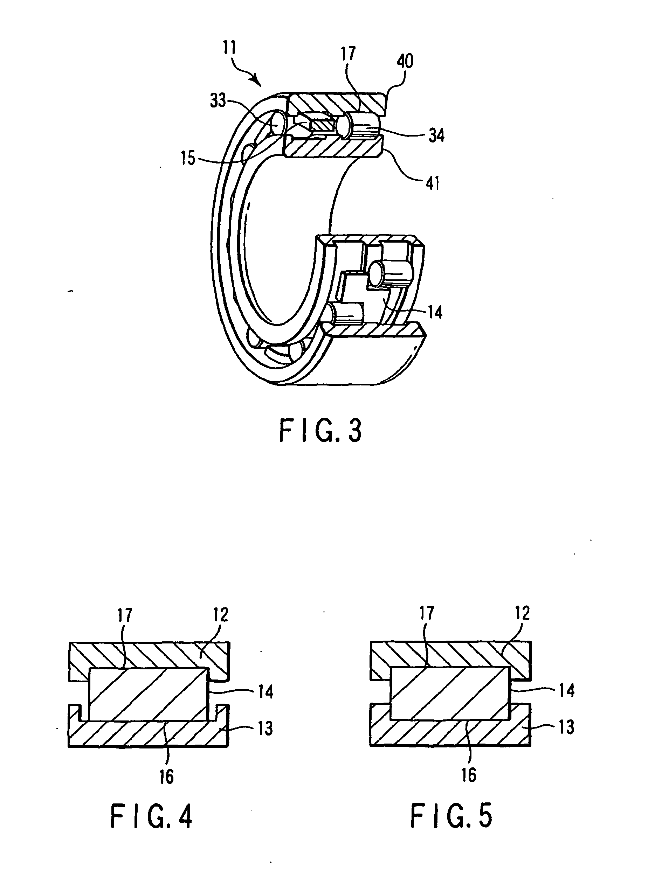

In the instance of FIG. 2, the inner ring 13 shows a U-shaped cross section (to form an angular groove or channel) to produce a dent 16. The transversal distance of the dent 16, or the width of the surface facing the raceway surfaces of the cylindrical rolls, is made greater than the axial length of the cylindrical rolls 14. FIG. 3 shows an arrangement where cylindrical rolls are arranged in two rows.

FIG. 4 is an enlarged schematic cross-sectional view of the bearing of FIG. 2 taken along line A-A and viewed in the direction of the arrows. The outer width of the inner ring 13 is same as the outer width of the outer ring 12 in FIG. 4. However, the outer width of the inner ring may be made greater to increase the width of the dent 16 and also the thickness and hence the strength of the lateral walls of the U-shaped part of the inner ring.

FIG. 5 is a view of a known rolling bearing shown for the purpose of comparison. In both FIGS. 4 and 5, reference numeral 12 denotes an outer ring and reference numeral 13 denotes an inner ring, while reference numeral 14 denotes a cylindrical roll.

It will be clear from FIGS. 2 and 4 that, since the transversal distance of the wide dent 16 is greater than the axial length of the cylindrical rolls 14, the inner ring 13 can move transversally by the difference between the transversal distance of the dent 16 and the axial length of the cylindrical rolls 14.

It will be appreciated that, if the transversal length of the dent of inner ring and that of the outer ring are the same as the axial length of the cylindrical rolls in the strict sense of the word, there is no clearance between the inner and outer rings and the cylindrical rolls so that the rolling bearing cannot revolve at all. Therefore, the transversal length of the dent of the inner ring and that of the outer ring are made slightly greater than the axial length of the cylindrical rolls in ordinary rolling bearings in order to provide an appropriate clearance.

However, the transversal length of the dent of the inner ring 13 is made greater than the axial length of the cylindrical rolls 14 beyond the ordinary range of clearance according to the present invention. With this arrangement, the inner ring or the outer ring can move and hence the roller equipped with this bearing can move axially.

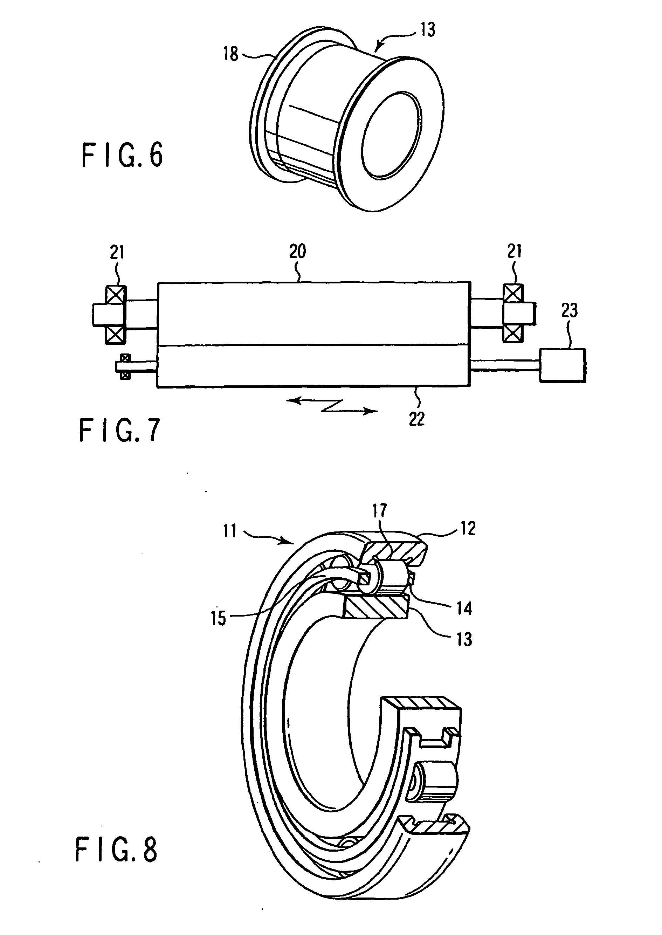

According to the present invention, the difference between the transversal distance of the dent of the inner or outer ring and the axial length of the cylindrical rolls 14 is between 3 mm and 5 mm. In terms of ratio, the axial length of the cylindrical rolls is preferably between 50% and 85% of the transversal distance of the dent of the inner or outer ring. While the inner ring 13 is integrally formed with one or two collars in FIGS. 2 and 3, the collar 18 is preferably separable from the inner ring 13 as shown in FIG. 6.

The transversal length of the surface of the inner ring 13 that faces the raceway surfaces of the cylindrical rolls 14 is greater than the axial length of the cylindrical rolls 14 in the description given above by referring to FIG. 4. However, the above description relating to the inner ring 13 may be switched to the outer ring 12. More specifically, although not shown, the transversal length of the surface of the dent 17 arranged at the inside of the outer ring 12, or the transversal length of the surface of the outer ring 12 that faces the raceway surfaces of the cylindrical rolls 14 is made greater than the axial length of the cylindrical rolls 14. With this alternative arrangement, the outer ring 12 can move transversally by the difference between the transversal distance of the broadened dent and the axial length of the cylindrical rolls 14.

FIG. 7 is a schematic illustration of an oscillation roller mounted with rolling bearings at the shaft supporting sections at the opposite ends of the roller and adapted to be oscillated by a swing roller held in contact with the oscillation roller. In FIG. 7, reference numeral 20 denotes an oscillation roller and reference numeral 21 denotes a rolling bearding, while reference numeral 22 denotes a swing roller. The swing roller 22 is driven to revolve by a mechanism not shown and adapted to axially swing by means of a cam mechanism 23. The oscillation roller 20 is held in contact with the swing roller 22 so that it swings transversally as it revolves due to the friction with the swing roller 22.

The oscillation roller 20 of FIG. 7 is mounted with rolling bearings 21 that are the same and identical respectively at the shaft supporting sections at the opposite ends of the roller. However, the present invention is by no means limited thereto and, alternatively, the oscillation roller 20 may be mounted with a rolling bearing at one of the shaft supporting sections at the opposite ends of the roller and with a different rolling bearing at the other shaft supporting section as shown in FIGS. 8 through 16. In FIGS. 8 through 16, the components same as those illustrated in FIG. 2 are denoted respectively by the same reference numerals.

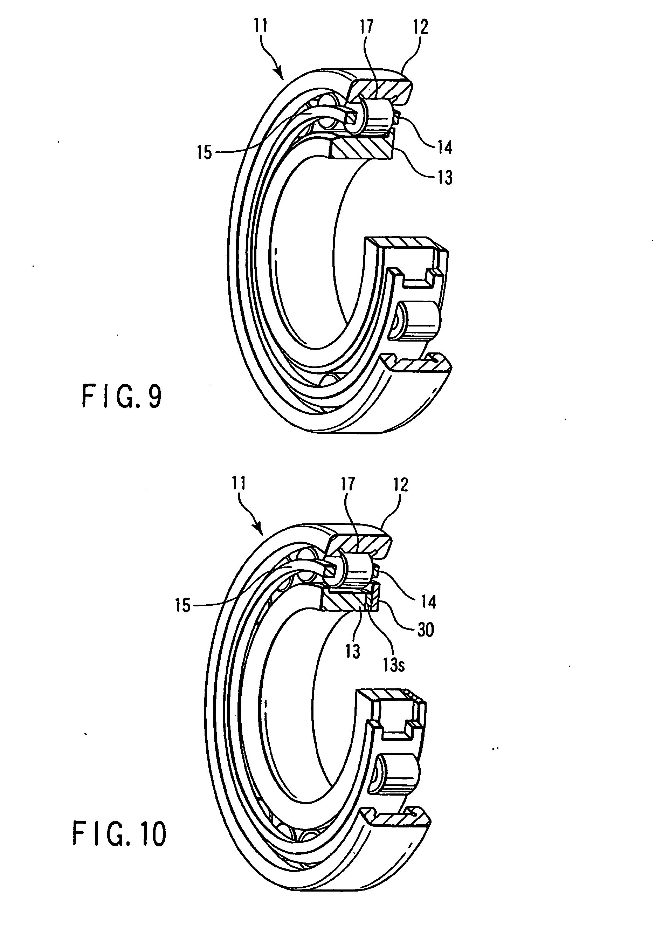

The rolling bearing shown in FIG. 8 is substantially same as the one illustrated in FIG. 2 and the inner ring 13 is not provided with any collar. With this arrangement, the inner ring 13 moves axially. The rolling bearing shown in FIG. 9 is substantially same as the one illustrated in FIG. 8 but the inner ring 13 is provided with a collar at one of the opposite edges thereof. With this arrangement, the inner ring 13 moves axially in one of the opposite directions (in the direction of the collar).

The rolling bearing shown in FIG. 10 is provided at the inner ring 13 thereof with a collar and a collar ring 30 is fitted to the opposite edge by way of a spacer 13S having a diameter substantially same as that of the inner ring. With this arrangement, the inner ring 13 can move axially in one of the opposite directions (in the direction of the collar) with the spacer 13S.

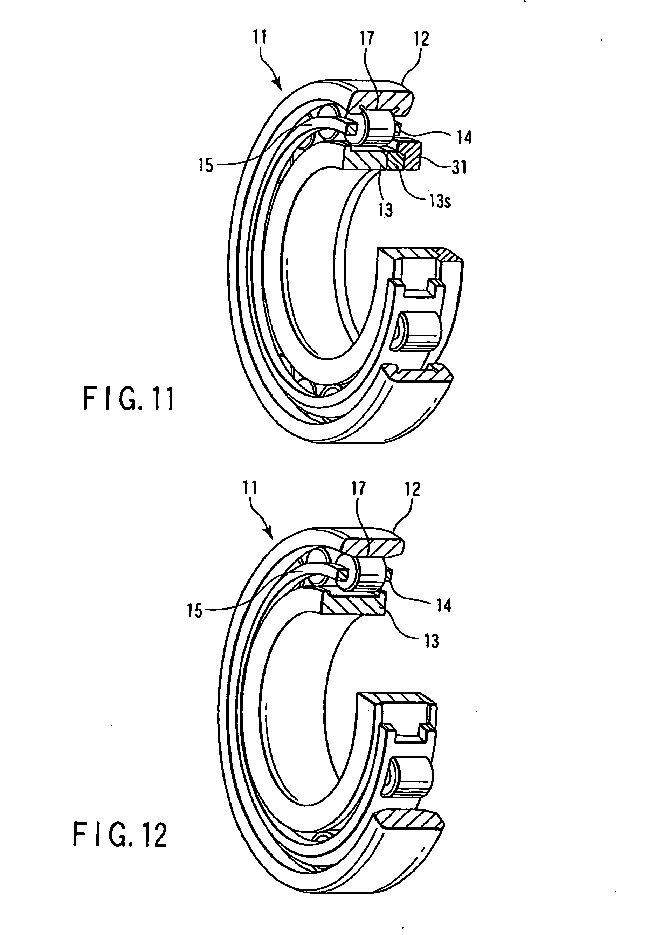

The rolling bearing shown in FIG. 11 substantially same as that of FIG. 9 and is provided at the inner ring 13 thereof with a collar and an L-shaped collar ring 31 is fitted to the opposite edge by way of a spacer 13S having a diameter substantially same as that of the inner ring. With this arrangement, the inner ring 13 can move axially in one of the opposite directions (in the direction of the collar) with the spacer 13S.

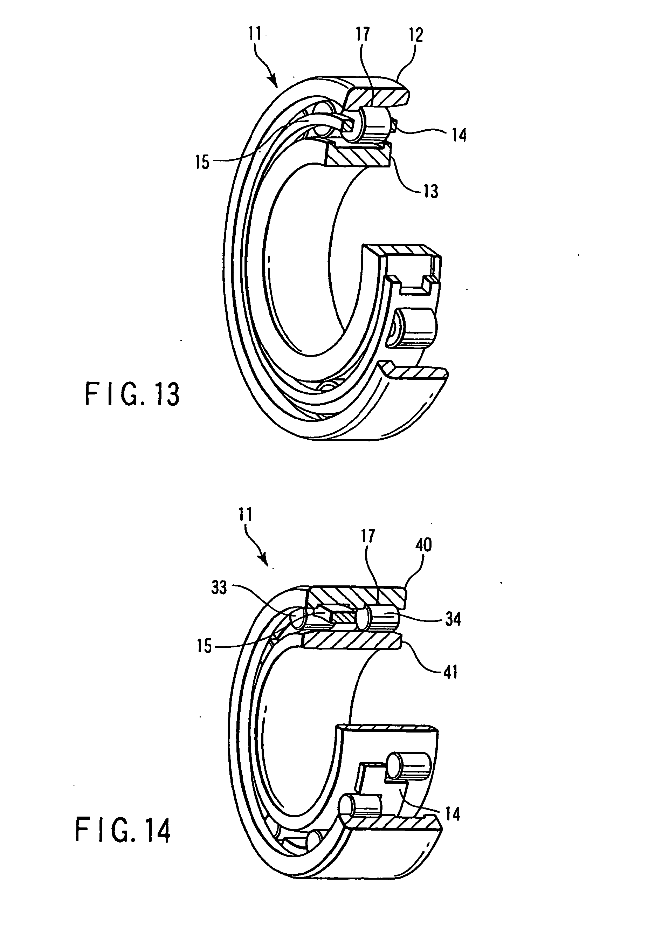

The rolling bearing shown in FIG. 12 is substantially same as that of FIG. 8 and the outer ring 12 thereof is not provided with any collar and can move axially. The rolling bearing shown in FIG. 13 is substantially same as that of FIG. 9 but the inner ring 13 is provided with a pair of collars and the outer ring 12 is provided with a collar so that the outer ring 12 can move axially in one of the opposite directions.

The rolling bearing shown in FIG. 14 is provided with cylindrical rolls 33, 34 that are arranged in two rows and outer ring 40 is provided with a pair of collars, while the inner ring 41 is not provided with any collar so that it can move axially.

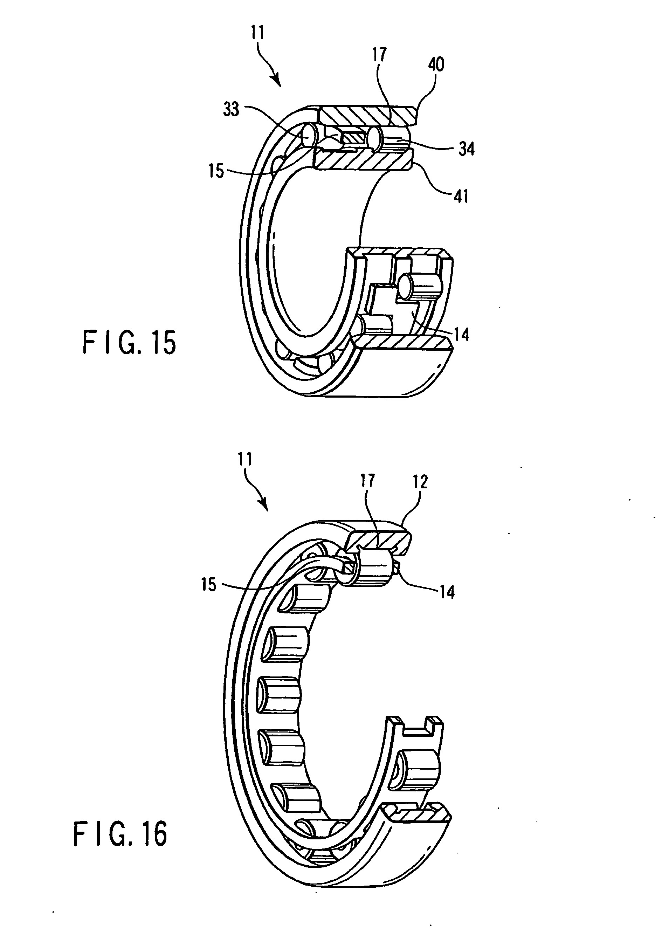

The tolling bearing shown in FIG. 15 is substantially same as that of FIG. 14 where cylindrical rolls 33, 34 are arranged in two rows and the outer ring 40 is not provided with any collar but the inner ring 41 is provided with a pair of collars at the opposite edges respectively. With this arrangement, the outer ring 12 can move axially. The rolling bearing shown in FIG. 16 is a solid type needle-shaped roll bearing and does not have any inner ring but the outer ring 12 thereof is provided with a pair of collars. With this arrangement, the shaft supporting sections of the roller is directly received by cylindrical rolls of this type.

FIGS. 17A1 through 17C1 are schematic illustrations of the relationship between the oscillation of a roller and the sliding motion of the inner ring of the rolling bearing. FIG. 17A1 shows the oscillation roller 20 located at the center and hence it is revolving without swinging transversally. In this situation, the inner ring 13 of the rolling bearing fitted to a shaft supporting section of the oscillation roller 20 is located at the center relative to the cylindrical rolls 14 thereof as shown in FIG. 17A1. Equal transversal gaps 17a, 17b are formed between the lateral walls of the dent 16 of the inner ring 13 and the cylindrical rolls.

As the swing roller 22 of FIG. 7 swings transversally, the oscillation roller 20 that is held in contact with the swing roller 22 and revolving swings in the direction of the arrow (leftward) as shown in FIG. 17B1. Under this condition, the inner ring 13 of the rolling bearing moves in the direction of the arrow (leftward) with respect to the cylindrical rolls 14 as shown in FIG. 17B1. Then, as a result, the oscillation roller smoothly moves transversally.

As the swing roller 22 swings transversally in the opposite direction (rightward), the oscillation roller 20 that is held in contact with the swing roller 22 and revolving swings in the direction opposite to the direction of the arrow (rightward) as shown in FIG. 17C1. Under this condition, the inner ring 13 of the rolling bearing moves in the direction opposite to the direction of the arrow (rightward) with respect to the cylindrical rolls 14 as shown in FIG. 17C1. Then, as a result, the oscillation roller 20 smoothly moves in the direction of the arrow, following the transversal swinging movement of the swing roller 22.

While the outer ring is fixed and the inner ring is moved in the above description, conversely the inner ring may be fixed and the outer ring may be moved. Then, the oscillation roller can be made to oscillate, following the transversal swinging motion of the swing roller.

A rolling bearing 21 as described above is fitted to each or either one of the shaft supporting sections of an oscillation roller 20. When a rolling bearing 21 is fitted to either one of the shaft supporting sections of an oscillation roller 20, a different rolling bearing having an outer ring or an inner ring that moves over a long range as shown in any of FIGS. 8 through 16 is fitted to the other shaft supporting section. With this arrangement, the roller oscillates within the range of the dent 16 of the bearing 21.

An oscillation roller according to the present invention can suitably be used as the form roller of a printing machine. An oscillation roller according to the present invention has a structure that is remarkably simple if compared with conventional oscillation rollers using a compression spring.

### Example 1

A pair of JIS B1513 NUP type rolling bearings having cylindrical rolls arranged in a single row, an outer ring that is provided with a pair of collars and an inner ring that is provided with a collar and a collar ring was brought in. The rolling bearings had the following dimensions - the outer diameter: 72 mm, the inner diameter: 30 mm and the width: 19 mm. Each of the rolling bearings was worked in such a way that the transversal distance of the surface of the inner ring facing cylindrical rolls became longer than the axial length of the cylindrical rolls by 4 mm. As a result, a pair of rolling bearings whose inner rings can move axially were prepared.

The rolling bearings were then respectively fitted to the supporting sections at the opposite sides of a form rubber roller 3 for transferring ink of a printing machine as shown in FIG. 18. As a result, the form roller was made capable of oscillating axially. The form roller was made to transfer ink to the printing plates mounted on a plate cylinder and arranged at regular intervals.

The form roller is adapted to oscillate axially by way of a swing roller 22 (metal roller) as shown in FIG. 7. The swing roller 22 is driven to make 90 round trips/min to 130 round trips/min (maximum) with a swinging width of 30 mm.

The oscillation roller had a core diameter of 110 mm × an outer diameter of 130 and a surface length of 1,620 mm. It was driven to revolve at a rate of 2,600 revolutions/min. The nip width was made to be equal to 7 mm. The rubber was nitrile rubber (NBR) with a hardness of 30.

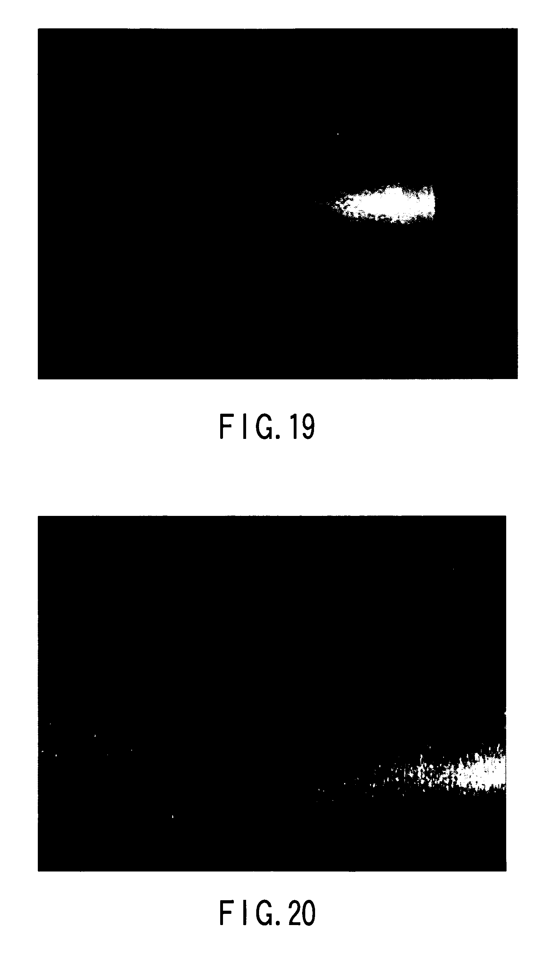

The printing machine was operated for printing continuously for six months, 10 hours/day. No abrasion was observed on the surface of the form rubber roller at the position corresponding to the edges of the printing plate. FIG. 19 is a photograph of the surface of the form rubber roller where the edges of the printing plate hit.

### (Comparative Example)

A pair of non-separable type JIS deep groove ball bearings having cylindrical rolls arranged in a single row was brought in as rolling bearings. The rolling bearings had the following dimensions - the outer diameter: 72 mm, the inner diameter: 30 mm and the width: 19 mm. The rolling bearings were then respectively fitted to the supporting sections at the opposite sides of a form rubber roller 3 for transferring ink of a printing machine as shown in FIG. 18. The deep groove ball bearings were of the standard type where neither the inner ring nor the outer ring oscillates for its structure. The form rubber roller was used to transfer ink as in Example. The dimensions, the number of revolutions per minute, the nip width, the rubber and the hardness of the rubber were same as those of Example 1 mentioned above.

The printing machine was operated for printing continuously for a week (seven days), 10 hours/day and the surface of the form rubber roller was observed. Abrasion was clearly observed on the surface of the form rubber roller at the position corresponding to the edges of the printing plate. FIG. 20 is a photograph of the surface of the form rubber roller where the edges of the printing plate hit. As seen from FIG. 20, a belt shaped abraded area was observed at upper and lower parts of the central area.

## Claims

1. An oscillation method of an inking roller of a printing machine, which makes the inking roller movable in an axial direction to follow movement of a swing roller (22) as the inking roller is brought into contact with the swing roller (22), the oscillation method **characterized by** comprising:
(1) making the transversal distance in the axial direction of the surface of a collared inner ring (12) and/or that of the surface of a collared outer ring (13) facing the raceway surfaces of cylindrical rolls (14) arranged between the inner ring (12) and the outer ring (13) of a rolling bearing greater than the axial length of the cylindrical rolls (14) by 3 mm to 5 mm so as to make the inner ring (12) and/or the outer ring (13), whichever appropriate, axially movable and fitting the rolling bearing to one of the shaft supporting sections at the opposite sides of the roller;
(2) fitting a rolling bearing having either an axially movable inner ring or an axially movable outer ring to one other shaft supporting section of the roller.

2. The method according to claim 1, **characterized in that** the rolling bearing fitted to the other shaft supporting section of the roller includes:
a collared inner ring (41), a collared outer ring (42) and a plurality of cylindrical rolls (14) arranged in a plurality of rows (33, 34) between the inner ring (41) and the outer ring (42), the transversal distance of the surface of the inner ring (41) and/or that of the surface of the outer ring (42) facing the raceway surfaces of the cylindrical rolls being made greater than the axial length of the cylindrical rolls arranged in a plurality of rows.

3. The method according to claim 1, **characterized in that** the rolling bearing fitted to the other shaft supporting section includes:
an outer ring (12) collared along the opposite edges thereof, cylindrical rolls (14) arranged between the collars and an uncollared inner ring (13) adapted to be axially movable.

4. The method according to claim 1, **characterized in that** the rolling bearing fitted to the other shaft supporting section includes:
an outer ring (13) collared along the opposite edges thereof, cylindrical rolls (14) arranged between the collars and an inner ring (12) collared along one of the opposite edges thereof and adapted to be axially movable.

5. The method according to claim 1, **characterized in that** the rolling bearing fitted to the other shaft supporting section includes:
an outer ring (12) collared along the opposite edges thereof, cylindrical rolls (14) arranged between the collars and an inner ring (13) collared along one of the opposite edges thereof and provided with a collar ring (30) fitted to the other edge by way of a spacer (13s) so as to make the inner ring axially movable toward the collar ring (30), the spacer having a diameter substantially same as the inner ring (12).

6. The method according to claim 1, **characterized in that** the rolling bearing fitted to the other shaft supporting section includes:
a collarless outer ring, an inner ring (13) collared along the opposite edges thereof and cylindrical rolls (14) arranged between the collars, the outer ring (12) being adapted to be axially movable.

7. The method according to claim 1, **characterized in that** the rolling bearing fitted to the other shaft supporting section includes:
an outer ring (12) collared along one of the opposite edges thereof, an inner ring (13) collared along the opposite edges thereof and cylindrical rolls (14) arranged between the collars, the outer ring being adapted to be axially movable.

8. The method according to claim 1, **characterized in that** the rolling bearing fitted to the other shaft supporting section includes:
an outer ring (40) collared along the opposite edges thereof, cylindrical rolls (14) arranged in a plurality of rows (33, 34) between the collars, a collarless inner ring (41) being adapted to be axially movable.

9. The method according to claim 1, **characterized in that** the rolling bearing fitted to the other shaft supporting section includes:
an inner ring (41) collared along the opposite edges thereof, cylindrical rolls (33, 34) arranged in a plurality of rows between the collars, a collarless outer ring (40) being adapted to be axially movable.

## Patentansprüche

1. Schwingungsverfahren einer Farbwalze einer Druckmaschine, welches die Farbwalze in einer axialen Richtung beweglich macht, um der Bewegung einer Schwenkwalze (22) zu folgen, wenn die Farbwalze mit der Schwenkwalze (22) in Kontakt gebracht wird, wobei das Schwingungsverfahren **dadurch gekennzeichnet ist, dass** es umfasst:
(1) Auslegen der Querstrecke in der axialen Richtung der Oberfläche eines Krageninnenrings (12) und/oder der der Oberfläche eines Kragenaußenrings (13), die den Laufbahnflächen von zylindrischen Walzen (14) zugewandt sind, die zwischen dem Innenring (12) und dem Außenring (13) eines Wälzlagers angeordnet sind, um 3 mm bis 5 mm größer als die axiale Länge der zylindrischen Walzen (14), um den Innenring (12) und/oder den Außenring (13), je nachdem was zutrifft, axial beweglich zu machen, und Anbringen des Wälzlagers an einem der Wellenlagerabschnitte an den gegenüberliegenden Seiten der Walze;
(2) Anbringen eines Wälzlagers, das entweder einen axial beweglichen Innenring oder einen axial beweglichen Außenring aufweist, an einem anderen Wellenlagerabschnitt der Walze.

2. Verfahren nach Anspruch 1, **dadurch gekennzeichnet, dass** das an dem anderen Wellenlagerabschnitt der Walze angebrachte Wälzlager umfasst:
einen Krageninnenring (41), einen Kragenaußenring (42) und mehrere zylindrische Walzen (14), die in mehreren Reihen (33, 34) zwischen dem Innenring (41) und dem Außenring (42) angeordnet sind, wobei die Querstrecke der Oberfläche des Innenrings (41) und/oder die der Oberfläche des Außenrings (42), die den Laufbahnflächen der zylindrischen Walzen zugewandt sind, größer als die axiale Länge der zylindrischen Walzen ausgelegt sind, die in mehreren Reihen angeordnet sind.

3. Verfahren nach Anspruch 1, **dadurch gekennzeichnet, dass** das an dem anderen Wellenlagerabschnitt angebrachte Wälzlager umfasst:
einen Außenring (12), der entlang seiner gegenüberliegenden Kanten mit Kragen versehen ist, zylindrische Walzen (14), die zwischen den Krägen angeordnet sind, und einen nicht mit Kragen versehenen Innenring (13), der axial beweglich ausgelegt ist.

4. Verfahren nach Anspruch 1, **dadurch gekennzeichnet, dass** das an dem anderen Wellenlagerabschnitt angebrachte Wälzlager umfasst:
einen Außenring (13), er entlang seiner gegenüberliegenden Kanten mit Kragen versehen ist, zylindrische Walzen (14), die zwischen den Krägen angeordnet sind, und einen Innenring (12), der entlang einer seiner gegenüberliegenden Kanten mit Kragen versehen und axial beweglich ausgelegt ist.

5. Verfahren nach Anspruch 1, **dadurch gekennzeichnet, dass** das an dem anderen Wellenlagerabschnitt angebrachte Wälzlager umfasst:
einen Außenring (12), der an seinen gegenüberliegenden Kanten mit Kragen versehen ist, zylindrische Walzen (14), die zwischen den Krägen angeordnet sind, und einen Innenring (13), der entlang einer seiner gegenüberliegenden Kanten mit Kragen versehen und mit einem Kragenring (30) versehen ist, der mittels eines Abstandshalters (13s) an der anderen Kante angebracht ist, um den Innenring hin zum Kragenring (30) axial beweglich zu machen, wobei der Abstandshalter einen Durchmesser aufweist, der im Wesentlichen gleich dem Innenring (12) ist.

6. Verfahren nach Anspruch 1, **dadurch gekennzeichnet, dass** das an dem anderen Wellenlagerabschnitt angebrachte Wälzlager umfasst:
einen kragenlosen Außenring, einen Innenring (13), der entlang seiner gegenüberliegenden Kanten mit Kragen versehen ist, und zylindrische Walzen (14), die zwischen den Krägen angeordnet sind, wobei der Außenring (12) axial beweglich ausgelegt ist.

7. Verfahren nach Anspruch 1, **dadurch gekennzeichnet, dass** das an dem anderen Wellenlagerabschnitt angebrachte Wälzlager umfasst:
einen Außenring (12), der entlang einer seiner gegenüberliegenden Kanten mit Kragen versehen ist, einen Innenring (13), der entlang seiner gegenüberliegenden Kanten mit Kragen versehen ist und zylindrische Walzen (14), die zwischen den Krägen angeordnet sind, wobei der Außenring axial beweglich ausgelegt ist.

8. Verfahren nach Anspruch 1, **dadurch gekennzeichnet, dass** das an dem anderen Wellenlagerabschnitt angebrachte Wälzlager umfasst:
einen Außenring (40), der entlang seiner gegenüberliegenden Kanten mit Kragen versehen ist, zylindrische Walzen (14), die in mehreren Reihen (33, 34) zwischen den Krägen angeordnet sind, einen kragenlosen Innenring (41), der axial beweglich ausgelegt ist.

9. Verfahren nach Anspruch 1, **dadurch gekennzeichnet, dass** das an dem anderen Wellenlagerabschnitt angebrachte Wälzlager umfasst:
einen Innenring (41), der entlang seiner gegenüberliegenden Kanten mit Kragen versehen ist, zylindrische Walzen (33, 34), die in mehreren Reihen zwischen den Krägen angeordnet sind, einen kragenlosen Außenring (40), der axial beweglich ausgelegt ist.

## Revendications

1. Méthode d'oscillation d'un cylindre encreur d'une machine d'impression, qui rend le cylindre encreur mobile dans une direction axiale afin de suivre le mouvement d'un rouleau pivotant (22) puisque le cylindre encreur est mis en contact avec le rouleau pivotant (22), la méthode d'oscillation **caractérisée en ce qu'**elle comprend :
(1) l'incitation de la distance transversale dans la direction axiale de la surface d'un anneau interne bagué (12) et/ou celle de la surface d'un anneau externe bagué (13) à faire face aux surfaces de voiles de rouleaux cylindriques (14) disposés entre l'anneau interne (12) et l'anneau externe (13) d'un palier roulant plus grand que la longueur axiale des rouleaux cylindriques (14) de 3 mm à 5 mm, afin de rendre, si opportun, l'anneau interne (12) et/ou l'anneau externe (13) mobiles axialement et en fixant le palier roulant à une des sections de support de tige sur les côtés opposés du rouleau ;
(2) la fixation d'un palier roulant ayant soit un anneau interne mobile axialement, soit un anneau externe mobile axialement vers une seule autre section de support de tige du rouleau.

2. Méthode selon la revendication 1, **caractérisée en ce que** le palier roulant fixé à l'autre section de support de tige du rouleau comporte :
un anneau interne bagué (41), un anneau externe bagué (42) et plusieurs rouleaux cylindriques (14) disposés dans plusieurs rangées (33, 34) entre l'anneau interne (41) et l'anneau externe (42), la distance transversale de la surface de l'anneau interne (41) et/ou celle de la surface de l'anneau externe (42) faisant face aux surfaces de voiles des rouleaux cylindriques étant rendues plus grandes que la longueur axiale des rouleaux cylindriques disposés dans plusieurs rangées.

3. Méthode selon la revendication 1, **caractérisée en ce que** le palier roulant fixé à l'autre section de support de tige comporte :
un anneau externe (12) bagué le long des bordures opposées de celle-ci, des rouleaux cylindriques (14) disposés entre les colliers et un anneau interne non bagué (13) adapté pour être mobile axialement.

4. Méthode selon la revendication 1, **caractérisée en ce que** le palier roulant fixé à l'autre section de support de tige comporte :
un anneau externe (13) bagué le long des bordures opposées de celle-ci, des rouleaux cylindriques (14) disposés entre les colliers et un anneau interne (12) bagué le long d'une des bordures opposées de celle-ci et adapté pour être mobile axialement.

5. Méthode selon la revendication 1, **caractérisée en ce que** le palier roulant fixé à l'autre section de support de tige comporte :
un anneau externe (12) bagué le long des bordures opposées de celle-ci, des rouleaux cylindriques (14) disposés entre les colliers et un anneau interne (13) bagué le long d'une des bordures opposées de celle-ci et doté d'un anneau à collier (30) fixé à l'autre bordure au moyen d'une entretoise (13s) afin de rendre l'anneau interne mobile axialement vers l'anneau à collier (30), l'entretoise ayant un diamètre identique pour l'essentiel à celui de l'anneau interne (12).

6. Méthode selon la revendication 1, **caractérisée en ce que** le palier roulant fixé à l'autre section de support de tige comporte :
un anneau externe sans bague, un anneau interne (13) bagué le long des bordures opposées de celle-ci et des rouleaux cylindriques (14) disposés entre les colliers, l'anneau externe (12) étant adapté pour être mobile axialement.

7. Méthode selon la revendication 1, **caractérisée en ce que** le palier roulant fixé à l'autre section de support de tige comporte :
un anneau externe (12) bagué le long d'une des bordures opposées de celle-ci, un anneau interne (13) bagué le long des bordures opposées de celle-ci et des rouleaux cylindriques (14) disposés entre les colliers, l'anneau externe étant adapté pour être mobile axialement.

8. Méthode selon la revendication 1, **caractérisée en ce que** le palier roulant fixé à l'autre section de support de tige comporte :
un anneau externe (40) bagué le long des bordures opposées de celle-ci, des rouleaux cylindriques (14) disposés dans plusieurs rangées (33, 34) entre les colliers, un anneau interne sans collier (41) étant adapté pour être mobile axialement.

9. Méthode selon la revendication 1, **caractérisée en ce que** le palier roulant fixé à l'autre section de support de tige comporte :
un anneau interne (41) bagué le long des bordures opposées de celle-ci, des rouleaux cylindriques (33, 34) disposés dans plusieurs rangées entre les colliers, un anneau externe sans collier (40) étant adapté pour être mobile axialement.
